# EUROPEAN PATENT SPECIFICATION

(11) **EP 0 497 335 B1**
(45) Date of publication and mention of the grant of the patent: **26.03.1997**
(21) Application number: 92101529.3
(22) Date of filing: 30.01.1992
(51) Int. Cl.: B29C 45/14

(54) **Method for the production of coated panels**
Verfahren zur Herstellung beschichteter Platten
Procédé pour la fabrication de panneaux revêtus

(30) Priority: 01.02.1991 IT MI910257
(43) Date of publication of application: 05.08.1992
(73) Proprietor: COMMER S.P.A., 20063 Cernusco sul Naviglio Milano (IT)
(72) Inventor: Siano, Dante, I-20093 Cologno Monzese (Milan) (IT)
(74) Representative: Marietti, Giuseppe

(56) References cited:
- EP-A- 0 320 925
- EP-A- 0 329 792
- PATENT ABSTRACTS OF JAPAN vol. 4, no. 45 (M-6)(527) & JP-A-55 015 888 (RIYUUJI UEMATSU) 4 February 1988
- PATENT ABSTRACTS OF JAPAN vol. 4, no. 25 (M-1)(507) 5 March 1980 & JP-A-55 000 213 (YUTAKA NAKAMURA) 5 January 1980

## Description

The present invention concerns a method for the production of coated panels according to the preamble of claim 1 and a coated panel according to the preamble of claim 8.

In particular the invention concerns a method for the production of internal panels for motor vehicles, of the type used as coating panels, covering or supporting panels, battery covers and the like.

Several techniques are known for producing coated panels by coupling a supporting layer with a coating, generally consisting of a PVC sheet shaped as "imitation leather" and possibly provided with fabric inserts.

A first technique envisages to shape and simultaneously couple, by molding, the coating with a thermoplastic sheet-like support previously rendered able to be shaped by heating. Examples of this technique are described in the European patent applications EP-A-0 401 649 and EP-A-0 416 216, both filed by COMMER S.p.A.

An alternative technique proposes to shape a support made of thermosetting material and to couple the support thus obtained with the desired coating by sticking.

According to a further known technique, the support, consisting of rigid polyurethane, is injected as foam into a mold in which a previously thermoformed coating is positioned. In this way the molding and coupling of the support are simultaneously obtained.

EP-A-0320925 discloses a process to obtain coated panels according to which a coating material is positioned in a mold and a supporting material is injected on the back of it to be coupled to said coating material, as per the preamble of claim 1. The coating material is adhered to one half of the mold by applying vacuum to the corresponding portion of the mold and a gas is injected together with the supporting material to obtain a hollow panel.

JP-A-55-213 discloses a process to produce cork pieces by injection molding a mixture of cork grains, a synthetic resin and a blending liquid.

JP-A-55-15888 discloses a process to manufacture casings for watches, jewelry and car glove compartments according to which a decorative material is first brought into contact with a portion of a mold and then a molten resin is injected into the mold.

A disadvantage shared by these techniques consists in the fact that a preshaping of the support or the coating is necessary. In case of the first mentioned technique as well, the coating must be preshaped to obtain the desired "imitation leather" appearance; moreover, during shaping by molding, the material is drawn in a non uniform way, thus imitation leather loses part of the peculiar roughness of the surface with subsequent loss of the required aesthetic effect.

A further disadvantage of the known techniques is given by the need of separately forming the staples necessary for some kinds of panels, and of fixing said staples to the panel, generally by sticking them thereto, after the panel molding.

The negative economical impact of such known manufacturing techniques is obvious.

An object of the present invention is therefore that of proposing a method for the production of coated panels for motor vehicles which associates the steps of shaping and coupling, and allows to obtain a finished panel in a single operation.

This object is achieved according to the invention by a method for the production of coated panels according to claim 1.

This object is further achieved by a coated panel according to claim 8.

Particular embodiments of the invention are disclosed in the dependent claims.

According to a preferential aspect of the invention, the coating material is not only shaped as tridimensional form, but also in correspondence with its own external surface so as to obtain an "imitation leather" effect during the injection molding of the support.

According to a further aspect of the invention, the panel is trimmed by shearing before it is removed from the mold. The invention will be now described with reference to the accompanying drawings given with illustrative and not limiting purposes, where:

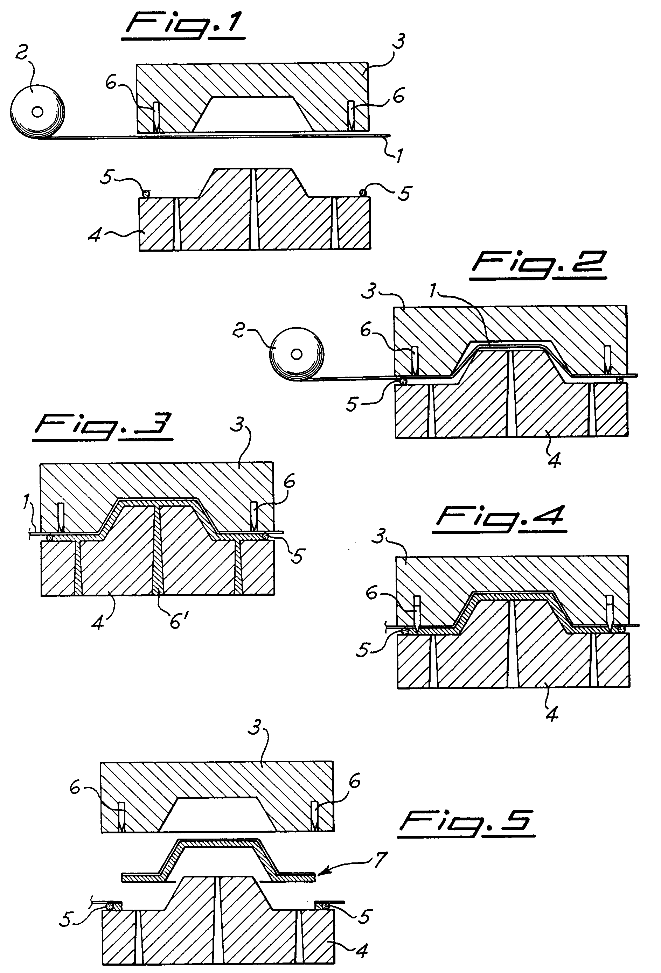

- figures 1-5 schematically show the different steps of the method according to the invention.

It is here pointed out that the word "panel" is meant to feature any type of a more or less shaped element, consisting of a coated self-bearing support. A preferential kind of panel according to the invention, which is referred to in the present invention with no intention of limiting it thereto, is the one used for motor vehicles interiors, and comprises side panels, dashboards, supporting panels, battery covers and the like. As previously mentioned, the method according to the invention envisages to position a coating made of a formable material inside the mold and to inject a second thermoplastic material, in plastic conditions and under pressure, into said mold, simultaneously shaping said first and said second material and coupling them with one another.

Any type of material capable to be deformed by the injection pressure of the supporting material can be used as said formable coating material. Examples of suitable coating materials are the coatings used in the production of internal panels for cars, such as those made of velvet-like fabric, felt-like stuff or non-woven fabric, possibly coupled with a layer of foamed material, preferably PVC foam. It is also possible to use coating materials such as PVC films "imitation leather" type or with smooth surface, preferably coupled with fine jersey to improve seal with the support: polypropylene films and other films of other plastic materials which can be shaped under molding conditions.

Any thermoplastic material susceptible of injection molding such as for instance PVC (polyvinylchloride) and vinyl resins in general can be used as supporting material: polyethylene, polypropylene and polyolefins in general: polyacrylate and polymethacrylate resins as well as polystyrene resins.

Preferably the aforelisted resins are filled, in a way known to the technique, with one or more inerts. A preferred supporting material is constituted by polypropylene filled with wood dust and commercialized under the name of "Woodstock" (Registered Trademark).

According to a particularly advantageous configuration of the invention, the supporting material is "Woodstock" and the coating consists at least partly of a polypropylene film possibly provided with fabric inserts.

With reference first of all to figure 1, the method according to the invention foresees to place a coating 1, to be fed step by step as a continuous ribbon from a roll 2, in between the two halves 3 and 4 of a mold for injection molding, provided with blankholders 5 ensuring sealing when the mold is closed (fig. 2) though allowing the coating enrichment necessary as a function of the shaping to be obtained.

The thermoplastic supporting material 6' is then injected (fig. 3). Said injection is obviously performed on the coating 1 back, in a way known to the skilled in the art, namely rendering the supporting material plastic and injecting it under pressure.

During this stage the supporting material 6', injected under pressure, forces the coating 1 against the mold half 3 to adhere thereto and shapes it according to the configuration of the mold half 3.

According to a particularly advantageous feature of the invention, a formable coating material is used, consisting in sheets or ribbons of smooth thermoplastic material, the outer surface of which, namely the one visible on the finished panel, is shaped during the molding stage according to the invention, so as to obtain a coating with aesthetic effect type "imitation leather" simultaneously with the panel production.

When the panel is formed, it is trimmed (fig. 4) by shearing thanks to movable blades 6 housed in one or both half-molds.

At this point the finished panel 7 is removed (fig. 5). All necessary manufacturing steps have thus been performed in a single operation: in fact the method according to the invention allows to obtain directly in the mold also the forming of staples or slots (not shown) with obvious advantages for the manufacturing time schedule.

The invention will be now furtherly illustrated by means of the following example.

### EXAMPLE

A portion of traditional velvet fabric is positioned into a pilot mold. Then a supporting material of filled (woodstock) polypropylene is injected at a temperature of approximately 200 degrees C. A perfect shaping of the fabric layer is obtained together with its excellent adhesion to the relevant support.

The preceding example was repeated several times replacing the portion of velvet fabric with a coating selected in sequence among the following ones: weft-warp fabric, jersey velvet, ladderproof fabric, felt-like non-fabric stuff, not felt-like non-fabric stuff and PVC with or without support.

## Claims

1. A method for the production of coated panels (7), comprising the simultaneous coupling and molding of a thermoplastic supporting material (6') of said panel with the relevant coating material (1), and the steps of: positioning the coating material (1) made of formable material between the two halves (3,4) of a mould, closing said mould to seal it, injecting the supporting material (6'), in plastic conditions and under pressure, into said mould, characterized in that it further comprises the steps of: sealing said mould by means of blankholders (5) located between said mould halves (3, 4); injecting said supporting material (6') into said mould, to have a coating (1) enrichment and to simultaneously shape said coating (1) and said supporting material (6'); and controlling the enrichment of said coating (1) within said mould by means of said blankholders (5).

2. A method according to claim 1, characterized in that said coating material (1) is fed step by step to the mould under the form of a continuous ribbon (2).

3. A method according to claim 1 or 2, characterized in using a coating material (1) with flat surface and in shaping said surface, during said moulding operation, by means of the surface of said mould half (3) to obtain an "imitation leather" type effect.

4. A method according to any claim 1 to 3, characterized in that staples or slots are formed on said panel (7) in a single operation directly in the mould.

5. A method according to any claim 1 to 4, characterized in that said supporting material (6') is polypropylene filled with wood dust.

6. A method according to claim 5, characterized in that said coating material (1) is at least partly a polypropylene film.

7. A method according to claim 1, characterized in that it also comprises a step in which the formed panel is trimmed before its removal from the mould.

8. A coated panel (7) comprising a coating material (1), and a supporting material (6') coupled to said coating material (1), characterized in that said supporting material (6') is a solid layer of material obtained by pressure injecting said supporting material (6') into a mould according to the method of any claim 1 to 7.

9. A panel (7) according to claim 8 wherein said supporting material is comprising staples or slots obtained directly in the said mould.

## Patentansprüche

1. Verfahren zur Herstellung von beschichteten Platten bzw. Paneelen (7), das das gleichzeitige Verbinden und Formen von einem thermoplastischen Stützmaterial (6') dieser Platte mit dem entsprechenden Beschichtungsmaterial (1) und die folgenden Schritte aufweist:
Positionieren des Beschichtungsmaterial (1), das aus formbaren Material besteht, zwischen zwei Hälften (3, 4) einer Form, Schließen dieser Form, um sie abzudichten, Injektion des Stützmaterials (6') in formbaren Zustand und unter Druck in die Form, dadurch gekennzeichnet, daß es außerdem die folgenden Schritte aufweist:
Abdichten der Form mittels Halter (5), die zwischen den Formhälften (3, 4) angeordnet sind; Injektion des Stützmaterials (6') in die Form, so daß eine Veredelung der Beschichtung (1) und gleichzeitig eine Formung der Beschichtung (1) und des Stützmaterials (6') stattfindet; und Kontrolle der Veredelung der Beschichtung (1) in der Form mittels der Halter (5).

2. Verfahren nach Anspruch 1, dadurch gekennzeichnet, daß das Beschichtungsmaterial in der Art eines kontinuierlichen Bandes (2) Schritt für Schritt in die Form eingebracht wird.

3. Verfahren nach Anspruch 1 oder 2, gekennzeichnet durch die Verwendung eines Beschichtungsmaterials (1) mit ebener Oberfläche und durch das Formen der Oberfläche während des Formungsschritts mittels der Oberfläche der Formhälfte (3), so daß ein "lederimitationsartiger" Effekt erzielt wird.

4. Verfahren nach einem der Ansprüche 1 bis 3, dadurch gekennzeichnet, daß Haken bzw. Halterung und Nuten bzw. Schlitze auf den Platten (7) in einem einzigen Vorgang direkt in der Form gebildet werden.

5. Verfahren nach einem der Ansprüche 1 bis 4, dadurch gekennzeichnet, daß das Stützmaterial (6') mit Holzmehl gestrecktes Polypropylen ist.

6. Verfahren nach Anspruch 5, dadurch gekennzeichnet, daß das Beschichtungsmaterial (1) wenigstens teilweise eine Polypropylenschicht ist.

7. Verfahren nach Anspruch 1, dadurch gekennzeichnet, daß es auch einen Schritt aufweist, in dem die geformte Platte vor Herausnahme aus der Form abgegratet bzw. beschnitten wird.

8. Beschichtete Platte (7), mit einem Beschichtungsmaterial (1) und einem Stützmaterial (6'), das mit dem Beschichtungsmaterial (1) verbunden ist, dadurch gekennzeichnet, daß das Stützmaterial (6') eine feste Schicht des Materials ist, die durch Einpressung des Stützmaterials (6') in eine Form nach dem Verfahren nach einem der Ansprüche 1 bis 7 hergestellt wurde.

9. Platte (7) nach Anspruch 8, wobei das Stützmaterial Haken bzw. Halterungen und Nuten bzw. Schlitze aufweist, die direkt in der Form hergestellt worden sind.

## Revendications

1. Procédé pour la fabrication de panneaux revêtus (7), comprenant la liaison et le moulage simultanés d'une matière de support thermoplastique (6') dudit panneau avec la matière de revêtement concernée (1), et les étapes de : positionnement de la matière de revêtement (1) constituée d'une matière formable, entre les deux moitiés (3,4) d'un moule ; fermeture dudit moule de façon étanche; et injection de la matière de support (6'), à l'état plastique et sous pression, dans ledit moule,
caractérisé en ce qu'il comprend en outre les étapes de : fermeture étanche dudit moule au moyen d'éléments de maintien d'ébauche (5) placés entre lesdites moitiés de moule (3,4) ; injection de ladite matière de support (6') dans ledit moule de façon à entraîner un apport de revêtement (1) et à former simultanément ladite matière de revêtement (1) et ladite matière de support (6') ; et le contrôle de l'apport de dite matière de revêtement (1) à l'intérieur dudit moule au moyen desdits éléments de maintien d'ébauche (5).

2. Procédé suivant la revendication 1, caractérisé en ce que ladite matière de revêtement (1) est amenée pas à pas au moule sous la forme d'un ruban continu (2).

3. Procédé suivant la revendication 1 ou 2, caractérisé par l'utilisation d'une matière de revêtement (1) à surface plane, et par le formage de ladite surface, pendant ladite opération de moulage, au moyen de la surface de ladite moitié de moule (3), de façon à obtenir un effet du type "imitation cuir".

4. Procédé suivant une quelconque des revendications 1 à 3, caractérisé en ce que des agrafes ou des fentes sont formées sur ledit panneau (7) en une seule opération, directement dans le moule.

5. Procédé suivant une quelconque des revendications 1 à 4, caractérisé en ce que ladite matière de support (6') est du polypropylène chargé avec de la sciure de bois.

6. Procédé suivant la revendication 5, caractérisé en ce que ladite matière de revêtement (1) est au moins en partie un film de polypropylène.

7. Procédé suivant la revendication 1, caractérisé en ce qu'il comprend également une étape dans laquelle le panneau formé est coupé à dimension avant son enlèvement du moule.

8. Panneau revêtu (7) comprenant une matière de revêtement (1) et une matière de support (6') liée à ladite matière de revêtement (1), caractérisé en ce que ladite matière de support (6') est une couche solide de matière obtenue par injection sous pression de ladite matière de support (6') dans un moule suivant le procédé d'une quelconque des revendications 1 à 7.

9. Panneau (7) suivant la revendication 8, dans lequel ladite matière de support comporte des agrafes ou des fentes obtenues directement dans ledit moule.
